# EUROPEAN PATENT APPLICATION

(11) **EP 4 837 890 A1**
(43) Date of publication of application: **11.11.2026**
(21) Application number: 25175411.5
(22) Date of filing: 09.05.2025
(51) Int. Cl.: C04B 20/10, C04B 28/14, C04B 38/02

(54) **GYPSUM WET FOAM WITH REDUCED WATER CONTENT**

(71) Applicant: PTA Solutions GmbH, 80802 München (DE)
(72) Inventor: GONZENBACH, Urs Thomas, 8107 Schweiz (CH); REICH, Patrick, 80802 München (DE); STURZENEGGER, Philip Noah, 8117 Fällanden (CH)
(74) Representative: Bardehle Pagenberg Partnerschaft mbB Patentanwälte Rechtsanwälte

(57) **Abstract**

The present invention relates to a to a water-gypsum-dispersion comprising calcined gypsum, a foam formation system comprising a solid particulate composition and at least one chemical blowing agent, water, and optionally one or more additives, wherein the gypsum particles and the solid particulate composition of the foam formation system are dispersed in the water. The present invention further provides a method for producing a foamed gypsum body comprising the steps of preparing a gypsum slurry by mixing gypsum, a foam formation system comprising a solid particulate composition and at least one chemical blowing agent, optionally one or more additives, and water, until the gypsum is suspended in the water and the gypsum slurry contains gas bubbles, casting the gypsum slurry, hardening and drying it. The present invention also relates to a foamed gypsum body produced by the method according to the invention or using the water-gypsum-dispersion according to the invention. The present invention further relates to a use of a foamed gypsum body for the production of gypsum cores and plaster boards, and wall elements.

## Description

### Technical field of the invention

The present invention relates to a water-gypsum-dispersion comprising calcined gypsum, a foam formation system comprising a solid particulate composition and at least one chemical blowing agent, water, and optionally one or more additives, wherein the gypsum particles and the solid particulate composition of the foam formation system are dispersed in the water. The present invention further provides a method for producing a foamed gypsum body comprising the steps of preparing a gypsum slurry by mixing gypsum, a foam formation system comprising a solid particulate composition and at least one chemical blowing agent, optionally one or more additives, and water, until the gypsum is homogeneously dispersed in the water and initiating the decomposition of the blowing agent to form gas bubbles, casting the gypsum slurry, hardening and drying it. The present invention also relates to a foamed gypsum body produced by the method according to the invention or using the water-gypsum-dispersion according to the invention. The present invention further relates to a use of a foamed gypsum body for the production of gypsum cores and plaster boards and wall elements.

### Background of the invention

Gypsum is a material used in building surface products such as gypsum panels. Gypsum is inexpensive and readily available. Furthermore, gypsum can be formed to useful shapes by for example casting, molding or other means. One useful application is the use of gypsum panels to form interior walls. These gypsum panels or plasterboards include a gypsum body sandwiched between facing sheets.

For the production of gypsum products typically a gypsum slurry is prepared that is cast to harden and dry. The typical water-to-gypsum ratio in a gypsum slurry is around 70 parts water to 100 parts gypsum by weight (see Maurizio Bellotto "Interactions between admixtures in wallboard production", Global Gypsum , 16 November 2012; Retrieved from https://www.usg.com/content/dam/USG_Marketing-Communications/united_states /product_promotional_materials/finished_assets/usg-hydrocal-A-11-Gypsum-Cement-Submittal-en-IG1390.pdf). This ratio can vary depending on the raw materials, the specific requirements of the production process, and the desired properties of the final product.

The water-to-gypsum ratio in the gypsum slurry can significantly affect the properties of the gypsum product, such as setting time, strength, and density. Maintaining high material strength is especially important in foamed products, because introducing porosity typically decreases the strength. As a change of the water-to-gypsum ratio can have a significant impact on the properties of the gypsum bodies, the ratio is usually held constant and additives or other ingredients are added to adjust the properties to the need of the user. However, these additional ingredients can be expensive, may interact with existing additives in the formulation and may also have negative side effects on some of the properties such as setting and crystal growth and shape, fire retardancy, or bubble de-stabilization and foam degradation.

In addition, reducing the water-to-gypsum ratio has economical and environmental benefits. A plasterboard line running at 100 m/min evaporates about 500 kg/min of water using energy in excess of 1.2 million kJ/min (see Maurizio Bellotto "Interactions between admixtures in wallboard production", Global Gypsum , 16 November 2012; Retrieved from < Interactions between admixtures in wallboard production>). These numbers demonstrate the potential and the importance of providing technologies with which the water-to-gypsum ratio can be reduced; and be it only for a few percent.

EP 4 349 555 A1 describes a method of forming a gypsum panel from a porous slurry. The slurry is formed by combining a stucco and water, adding foam to the stucco and water, stirring the stucco, water, and foam in a mixer. A foam-generating surfactant is used in aqueous solution and the solution is combined with air to pre-manufacture the foam. However, those surfactants are expensive compared to the relatively inexpensive gypsum and the stability of surfactant-stabilized foams is often lower compared to other methods of foam stabilization. Data showing how strongly surfactant foams degrade due to bubble growth and drainage already within the first 5 min after foam generation are plotted elsewhere (see Maurizio Bellotto "Interactions between admixtures in wallboard production", Global Gypsum , 16 November 2012; Retrieved from < Interactions between admixtures in wallboard production>). Further, the vigorous mixing that is needed to disperse the gypsum in the water does, to a certain extent, degrade the foam. This means, that the porosity added by the aqueous foam at the beginning of the mixing process is not equal to the porosity in the gypsum product after mixing. This is unbeneficial and makes it more difficult to control the production process. This means in addition, that the introduction of porosity and the mixing process cannot be controlled independently. Finally, by admixing the aqueous foam, water is added to the gypsum slurry along with the foam. The amount of water added depends on the target porosity. If a gypsum body with a high porosity is required, a larger fraction of foam and thus more water is added to the slurry. This dilution of the gypsum slurry is undesirable and the correlation between target porosity and water addition makes the recipe formulation unnecessarily difficult.

It is an object of the present invention to overcome these drawbacks of the prior art and to provide a method for the production of a foamed gypsum board with well-balanced properties while providing good workability of the slurry. Namely, the present invention discloses a method for reliably preparing foamed gypsum products at a reduced water-to-solids ratio. In particular, it is an aim of the present invention to increase process robustness, process control, and product reliability.

### Summary of the invention

These objectives are achieved by the water-gypsum-dispersion as defined in claim 1, the method as defined in claim 9, the foamed gypsum body as defined in claim 12 and the use as defined in claim 15.

Further aspects of the invention are disclosed in the specification and the dependent claims.

In a first aspect, the invention relates to a water-gypsum-dispersion comprising
- 50 - 77 % by wt. gypsum,
- a foam formation system comprising a solid particulate composition and at least one chemical blowing agent,
- water,
- optionally one or more additives,

wherein the gypsum particles and the solid particulate composition are dispersed in the water,
wherein the solid particulate composition comprises
   (a) catalytically active particles and
   (b) partially hydrophobized particles,
      wherein the amount of (b) in the solid particulate composition is in the range of 20.0-99.8% and/or the amount of (a) is in the range of 0.2-80.0%, and
      ∘ wherein the catalytically active particles (a) are selected to react with the chemical blowing agent to form a gas, and the catalytically active particles (a) are selected from the group consisting of metal oxides, metal hydroxides, metal carbonates, metal salts, enzymes or a mixture thereof selected from the group consisting of manganese oxides, iron oxides, alkali metal manganates, permanganates, alkali metal halides, enzymes and mixtures thereof, and
      ∘ wherein the partially hydrophobized particles (b) are selected from the group consisting of oxides, hydroxides, carbides, sulfates, nitrides, phosphates, carbonates, silicates (b.1), and
      ∘ wherein the partially hydrophobized particles (b) are obtained by modifying the surface of particles (b.1) with amphiphilic molecules (b.2) comprising at least a head group and a tail group,
**characterized in that**
the water-gypsum-dispersion has a low water-to-solids ratio between 0.3 and 0.65, and
the water-to-solids (w/s) ratio refers to the slurry after complete expansion of a water-gypsum-dispersion to foam and before hardening of the gypsum.

In another aspect, the invention relates to a method for producing a foamed gypsum body comprising the steps of
a) preparing a water-gypsum-dispersion by
   a1) mixing
      ∘ water or an aqueous solution,
      ∘ in arbitrary order
         ▪ gypsum, preferably calcined gypsum,
         ▪ a foam formation system comprising a solid particulate composition and at least one chemical blowing agent and
         ▪ optionally one or more additives,
      until at least the gypsum and the solid particulate composition are suspended in the water or
   a2) mixing
      ∘ water or an aqueous solution,
      ∘ in arbitrary order
         ▪ gypsum, preferably calcined gypsum,
         ▪ as the first component of the foam formation system a solid particulate composition and
         ▪ optionally one or more additives

      until the gypsum and the solid particulate composition are suspended in the water and
      adding the second component of the foam formation system, the blowing agent, to the water-gypsum-dispersion,
b) mixing the water-gypsum-dispersion of step a1) or step a2) until the gypsum slurry is homogenous, and
c) transferring the foamed gypsum slurry to a mold or a production line, e.g. to a conveyor belt,
d) allowing the foamed gypsum slurry to harden and drying it.

The solid particulate composition comprises
(a) catalytically active particles and
(b) partially hydrophobized particles,
wherein the amount of (b) in the solid particulate composition is in the range of 20.0-99.8% and/or the amount of (a) is in the range of 0.2-80.0%. The catalytically active particles (a) of the solid particulate composition are selected to react with the chemical blowing agent to form a gas, and the catalytically active particles (a) are selected from the group consisting of metal oxides, metal hydroxides, metal carbonates, metal salts, enzymes or a mixture thereof selected from the group consisting of manganese oxides, iron oxides, alkali metal manganates, permanganates, alkali metal halides, enzymes and mixtures thereof. The partially hydrophobized particles (b) of the solid particulate composition are obtained by selecting particles (b.1) from the group consisting of oxides, hydroxides, carbides, sulfates, nitrides, phosphates, carbonates, silicates, and modifying their surface with amphiphilic molecules (b.2) comprising at least a head group and a tail group.

The gypsum slurry has a low water-to-solids ratio, i.e. w/s ratio, between 0.30 and 0.65, and the w/s ratio refers to the gypsum slurry that forms the continuous phase of the foam after complete decomposition of the blowing agent and before hardening of the gypsum.

In another aspect, the invention relates to a foamed gypsum body produced by the method according to the invention.

In another aspect, the invention relates to a use of foamed gypsum body for the production of gypsum cores, plaster boards, and wall elements.

The present invention will be described in more detail below. It is understood that the various embodiments, preferences and ranges as provided / disclosed in this specification may be combined at will.

### Detailed description of the invention

### Definitions

Unless otherwise stated, the following definitions shall apply in this specification:
The term "suspension" is used to mean a system in which particles of one substance are distributed throughout another substance. Water or an aqueous solution acts as the continuous phase or dispersing medium in which other particles are dispersed.

The terms "comprise" and "comprising" are used in the inclusive, open sense, meaning that additional elements may be included. It is not intended to be construed as "consists of only".

Throughout this specification unless the context requires otherwise the word "comprise", and variations such as "comprises" and "comprising", will be understood to imply the inclusion of a stated element or step or group of elements or steps but not the exclusion of any other element or step or group of elements or steps.

The term "including" is used to mean "included but not limited to". "Including" and "including but not limited to" are used interchangeably.

The terms "consist of" and "consisting of" are used, when no further elements are present in the product apart from the ones following said wording.

All percentages hereinafter refer to weight percentage, i.e. % by weight, unless otherwise defined.

### Water-gypsum-dispersion

The water-gypsum-dispersion according to the invention is a dispersion. The dispersion is a system in which gypsum particles are distributed throughout water, which acts as the continuous phase. In particular, the water-gypsum-dispersion is a suspension. In this type of dispersion, the gypsum particles are dispersed in water or an aqueous solution, but they are large enough to eventually settle out over time if left undisturbed. This makes it a heterogeneous mixture, where the solid particles are not dissolved but suspended in the liquid medium water.

In one embodiment, the amount of gypsum, hydrophobized particles, catalytically active particles, blowing agent, water and additives sum up to 100%.

In one embodiment the water-gypsum-dispersion consists of
- 50 - 77 % by wt. calcined gypsum, preferably 60 - 77 % by wt. gypsum,
- a foam formation system comprising the particulate composition, and at least one blowing agent,
- water,
- optionally one or more additives,
wherein the components add up to 100 % by wt..

For preparing the water-gypsum-dispersion, gypsum, preferably calcined gypsum, is mixed in arbitrary order with water, one or more components of the foam formation system, preferably the solid particulate composition of the foam formation system, and optionally additives to form a dispersion. Based on the setup of the process the components of the foam formation system are added in several steps or simultaneously.

According to one aspect, the water-to-solids ratio in the water-gypsum-dispersion is 0.30 - 0.65.

According to one aspect, the water-gypsum-dispersion to be processed has a pH value of 6 - 10, preferably 6 - 8, particularly preferably 6.8 - 7.4.

As used herein, water is generally to be understood as a water-based liquid, which may also contain other additives, such as pH regulating agents. The water may be purified water, distilled water, or tap water.

The gypsum body produced with the water-gypsum-dispersion according to the invention contains the remains and/or chemical products of the catalytically active particles (a) after reaction with the blowing agent, the partially hydrophobized particles (b) with the amphiphilic molecules (b.2), and the additives.

### Method for producing a foamed gypsum body

In one aspect, the invention relates to a method for producing a foamed gypsum body comprising the steps of
- preparing a water-gypsum-dispersion by
   a1) mixing
      ∘ water or an aqueous solution,
      ∘ in arbitrary order
         ▪ gypsum, preferably calcined gypsum,
         ▪ a foam formation system comprising a solid particulate composition and at least one chemical blowing agent and
         ▪ optionally one or more additives,
      until at least the gypsum and the solid particulate composition are suspended in the water or
   a2) mixing
      ∘ water or an aqueous solution,
      ∘ in arbitrary order
         ▪ gypsum, preferably calcined gypsum,
         ▪ as the first component of the foam formation system a solid particulate composition and
         ▪ optionally one or more additives

      until the gypsum and the solid particulate composition are suspended in the water and
      adding the second component of the foam formation system, the blowing agent, to the water-gypsum-dispersion,
   b) mixing the water-gypsum-dispersion of step a1) or step a2) until the gypsum slurry is homogenous, and
   c) transferring the gypsum slurry to a mold or a production line, e.g. to a conveyor belt,
   d) allowing the foamed gypsum slurry to harden and drying it.

The mixing step b) may be conducted as a batch procedure in the mixer of step a1), a2), or in a separate mixer or as continuous process in an in-line mixer while transferring the gypsum slurry to a mold or a conveyor belt.

The gypsum slurry has a low w/s ratio between 0.30 and 0.65; the w/s ratio refers to the gypsum slurry after complete expansion of the water-gypsum-dispersion to a foam and before hardening of the gypsum. The foamed gypsum slurry is a gypsum slurry with gas bubbles contained therein. The gypsum slurry usually has a creamy consistency and it is self-levelling or can be levelled with a blade, by rolling over a top face, by vibration, or by any other means. The consistency depends among others on the composition of the slurry and the properties of the foam.

The gypsum slurry preferably has a low w/s ratio between 0.30 and 0.65, more preferably 0.30 and 0.60, more preferably between 0.30 and 0.55 and even more preferably between 0.30 - 0.50.

The water-to-solids ratio in the suspension after complete expansion to foam and before plaster hardening is up to 7, preferably 10, more preferably 15, and even more preferably 20 % lower than the water-to-solids ratio in a conventional gypsum slurry. More specifically, the water-to-solids ratio in the suspension after complete expansion to foam and before plaster hardening is up to 7, preferably 10, more preferably 15, and even more preferably 20 % lower than the water-to-solids ratio in a conventional gypsum slurry of a foamed gypsum product after foam formation and before setting. As there is less water in the foamed gypsum slurry using the method according to the invention, a higher final strength is achieved. Also, less water leads to a reduction of the drying time and the energy needed for drying of the gypsum product after setting/hardening. Thus, the improved water-to-solids ratio leads to better mechanical properties and a reduction in production costs and environmental impact, like for example a reduction in CO2 emissions.

It has been found that the decrease of water-to-solids ratio in the inventive method among other parameters depends on the gypsum used in preparation of the gypsum slurry. For example, with alpha-calcium sulfate hemihydrate a lower water-to-solids-ratio is possible than using stucco containing mainly beta-calcium sulfate hemihydrate.

Despite the water-to-solids ratio between 0.3 and 0.65 the suspension viscosity is still appropriate for foam formation for various industrial applications. In addition, a particularly high solids content of gypsum particles can be achieved.

The extent and rate of foaming and expansion of the gypsum slurry is, among other factors, determined by the composition of the foam formation system. The foaming of gypsum suspension is achieved through the decomposition of the blowing agent. This chemical reaction produces e.g. oxygen gas or carbon dioxide gas which, due to the presence of partially hydrophobized particles, results in a gypsum body with a defined porosity, a controlled pore structure with defined pore size and a homogeneous distribution of the pores.

The solid particulate composition comprises
(a) catalytically active particles and
(b) partially hydrophobized particles,
wherein the amount of (b) in the solid particulate composition is in the range of 20.0-99.8% and/or the amount of (a) is in the range of 0.2-80.0%.

The gypsum slurry may be prepared by pre-mixing the dry components. The order of addition of the dry components is not important. It may be adjusted to what occurs to be most beneficial from technical and economic viewpoints. Thus, prior to entry into a mixer, all dry additives can be added to the powdered gypsum. Alternatively, the single components might be fed separately to the mixing vessel. Then the pre-mixed dry components are mixed with water, so called wet mixing, to create a water-gypsum-dispersion.

Alternatively, the gypsum slurry may be prepared by adding the powdered gypsum and all other dry components separately to the water. The slurry can for example be prepared by placing water in a mixer and stirring it. Then the solid particulate composition is added to the water and mixed. In the next step, gypsum can be added to this water phase and the resulting water-gypsum-suspension is stirred and homogenized. It is possible as well to first disperse the gypsum in the water, followed by the solid particulate composition and homogenization of the resulting water-gypsum-dispersion. As a final step the blowing agent is added and mixed with the suspension.

When the blowing agent decomposes, e,g. by coming into contact with the catalytically active particles in the water-gypsum-dispersion, the formation of bubbles starts, and the suspension is foamed until complete decomposition of the blowing agent resulting in a foamed gypsum slurry. The adding and mixing of the blowing agent in the water-gypsum-dispersion can be done simultaneously with the preparation of the water-gypsum-dispersion or it can be done in a separate step after the preparation of the water-gypsum-dispersion. The mixing of the blowing agent in the water-gypsum-dispersion can be done using a variety of mixing techniques. The result of mixing will depend among other parameters on the batch size, design of the mixer, agitator blade design, agitator speed, geometry, number of elements, and diameter of a static mixer, residence time of the product in the mixer, or water-to-solids ratio. The mixing can be a continuous procedure or a batch procedure.

If additives are used, one or more additives may directly be added to the mixer. Alternatively or additionally, one or more additives may be added to the water or the gypsum.

The method may further comprise the steps of
- casting the gypsum slurry on a conveyor belt or casting the gypsum slurry in a hollow mold,
- hardening the gypsum slurry to a gypsum body on the conveyor belt or in the hollow mold and
- drying the gypsum body.

If the process is a continuous process the gypsum slurry may be cast on to a conveyor belt that serves as an endless mold or that conveys a series of discrete mold cavities to harden and dry. If the process is a batch process the gypsum may be cast in a hollow mold. A quasi-continuous process where the mixing is done batchwise while the casting is done continuously is possible as well.

Casting of the water-gypsum-dispersion may happen before the decomposition of the blowing agent is initiated. Casting of the water-gypsum-dispersion may happen simultaneously or shortly after the initiation of the decomposition of the blowing agent. Furthermore, casting may be done at any time during the decomposition of the blowing agent. Finally, the water-gypsum-dispersion can be cast after the decomposition of the blowing agent is completed.

In one embodiment the water-gypsum-dispersion is prepared by mixing
50 to 77 % by wt.. preferably 60 - 77 % by wt. gypsum, preferably calcined gypsum,
22.9 to 49.9 %, preferably 22.9 - 39.9 % by wt. water,
0.1 to 20.0 % by wt. foam formation system,
optionally one or more additives,
optionally one or more fillers, and
optionally one or more binders,
wherein the components add up to 100 % by wt..

In another embodiment, the water-gypsum-dispersion is prepared by mixing
55 to 77 % by wt. gypsum, preferably calcined gypsum,
22.9 to 44.9 % by wt. water,
0.1 to 6.0 % by wt. foam formation system,
optionally one or more additives,
optionally one or more fillers, and
optionally one or more binders,
wherein the components add up to 100 % by wt..

In one embodiment the method is used to produce gypsum plasterboards. A gypsum slurry is prepared as described herein. The gypsum slurry is fed between continuous layers of paper on a conveyor belt, which can be part of a conveyor line.

As the wet gypsum board travels the length of a conveyor belt or conveying line, the calcium sulfate hemihydrate combines with water in the slurry to form solid calcium sulfate dihydrate, or gypsum, resulting in a rigid core. The paper becomes chemically and mechanically bonded to the gypsum body, which forms the core. The gypsum board is then cut to length and conveyed through dryers to remove any free moisture. The gypsum board may be dried by direct contact with hot combustion gases or by indirect steam heating.

The conveyor belt can have a belt speed of 30 to 120 meters per minute, preferably 60 - 100 meters per minute.

The production of gypsum bodies, especially gypsum plaster board using a conveyor belt, is a continuous process, therefore, the reaction speed of the agents of the foam formation system is important. This is different from the manufacturing of other foamable materials which are produced in a batch process. The foam formation system needs to assure close to 100% gas release, for example 98% of gas release, and the stabilization of the gas in the water-gypsum-dispersion in the shape of small bubbles within a short time interval of 1 - 60 s, preferably 1 - 30 s, more preferably 1 - 10 seconds, and even more preferably within 1 - 5 s. Thus, using the water-gypsum-dispersion according to the invention, a high speed of the conveyor belt is possible while a stable wet foam is produced. Due to the nature of the partially hydrophobized particles, stable and even sized bubbles are formed which leads to a gypsum material with a uniform microstructure and defined properties even if produced at high speed.

The production of gypsum bodies, especially gypsum plaster board using a conveyor belt, is a continuous process, therefore, workability and setting time of the gypsum slurry are important. Using a formulation with a lower water-to-solids ratio compared to the state of the art has an impact on the strength, the setting time and the density of the gypsum body.
1. Strength: Reducing the water content increases the strength. Surprisingly, the workability of the slurry could be kept at a level which is suited for foam generation with the method according to the invention, despite the lowered water content.
2. Setting Time: The lower water content helps to shorten the setting time, which might be beneficial for faster production, or it helps do reduce the accelerator concentration and save cost. A low water content could lead to issues with workability, but as described above the workability could be kept at a level which is suited for foam generation using the method according to the invention.
3. Drying Time: The lower water content also leads to a reduction of the drying time and the energy needed for drying of the gypsum product after setting/hardening. This leads to a reduction in production costs and the environmental impact, like for example CO2 emissions.
4. Density: A lower water-to-gypsum ratio results in gypsum with a lower fraction of microporosity and thus with improved mechanical properties. This comes at the cost of increased density. But with the method according to the invention, the density increase can be compensated by adjusting the macro porosity. The method allows for good control over the properties of the gypsum body, mainly thanks to an even pore distribution and because the pore size can deliberately be controlled and both aspects help keeping the gypsum body comparably light despite the low water content.

### Gypsum

The gypsum can be anhydrous gypsum, crushed natural gypsum or synthetic gypsum, a gypsum hemihydrate, a gypsum hydrate or a mixture thereof, preferably the gypsum is alpha calcium sulfate hemihydrate, beta calcium sulfate hemihydrate, water-soluble calcium sulfate anhydrite, or a mixture thereof. Stucco can also be used.

Crushed natural gypsum or synthetic gypsum can be heated or calcined to dehydrate the feedstock. Stucco plaster, which can also be used, consists mainly of beta calcium sulphate hemihydrate.

Gypsum powder is understood here to be a quantity of gypsum particles, which preferably have a median diameter of 0.2 - 45 micrometers.

The gypsum body comprises a porous gypsum-based material. In this context, gypsum is understood to mean the mineral CaSO4*2H₂O, the dihydrate in the finished gypsum body. In addition to gypsum, the gypsum body may also contain other substances, e.g. other inorganic materials such as minerals like quartz, aluminum oxide, aluminum hydroxide, calcium carbonate, magnesium hydroxide, unexpanded perlite or vermiculite or clay.

To prepare the gypsum for the use in the dispersion, crushed natural gypsum or synthetic gypsum like REA gypsum can be heated or calcined to dehydrate the feedstock. The gypsum for the use in the dispersion may contain 0.5 - 80.0% or 1 - 50% or 1 - 20% of calcined recycled gypsum, stemming from sources like recycled gypsum boards or any other source that is suited for recycling.

The percentage of the mass of all sulfate compounds, like for example anhydrous calcium sulfate, calcium sulfate hemihydrate, calcium sulfate dihydrate, is at least 70%, preferably at least 80%, based on the total weight of gypsum used for the preparation of the water-gypsum-dispersion.

### Foam formation system

The foam formation system comprises a solid particulate composition and at least one chemical blowing agent. The foam formation system may be a 2-component system or a one component system. If the foam formation system is a 2-component system one component may be the solid particulate composition and the second component may be a blowing agent. The blowing agent may be present in liquid form.

The solid particulate composition comprises
(a) catalytically active particles and
(b) partially hydrophobized particles,
wherein the catalytically active particles (a) are selected to react with the chemical blowing agent to form a gas.

The amount of (b) partially hydrophobized particles in the solid particulate composition is in the range of 20.0-99.8% and/or the amount of (a) catalytically active particles in the solid particulate composition is in the range of 0.2-80.0%.

In one embodiment, the amount of (b) in the solid particulate composition may be in the range of 20.0-99.8% and/or the amount of (a) may be in the range of 0.2-80.0%, preferably the amount of (b) is in the range of 60.0-99.8% and/or the amount of (a) in the range of 0.2-40.0%, most preferably the amount of (b) is in the range of 70.0-99.8% and/or the amount of (a) is in the range of 0.2-30.0%.

The foam formation system is added to the water-gypsum-dispersion in an amount of preferably between 0.1 % by wt. to 20.0 % by wt., preferably between 0.2 % by wt. to 12.0 % by wt., more preferably between 0.2 % by wt. to 6.0 % by wt., and even more preferably between 0.5 % by wt. to 3.0 % by wt., based on the total weight of the water-gypsum-dispersion.

Expressed in percent per volume of the water-gypsum-dispersion, the foam formation system is present in the water-gypsum-dispersion in an amount of between 0.1 vol% to 15.0 vol%, preferably 0.2 - 10.0 vol%, and more preferably 0.4 - 7.0 vol%.

The foam formation system or one component of the foam formation system, the solid particulate composition, can be a powder, preferably with a particle size from 30 nm to 500 µm, more preferably 30 nm to 300 µm, more preferably 100 nm to 100 µm, and even more preferably 500 nm to 50 µm and most preferably 500 nm to 20 µm or the foam formation system or the solid particulate composition of the foam formation system can be a granulate, preferably with a size of the granules of from 0,5 mm - 20 mm.

It was found that the particle size distribution is of less importance. Good foams can be obtained with narrow as well as with broad particle size distribution.

The foam formation system or one component of the foam formation system is dispersed in the dispersing medium. The water-gypsum-dispersion is foamed by decomposition of the blowing agent.

The solid part of the foam formation system is preferably a powder. As it is a dry, homogeneous substance, it is stable and exhibits long shelf life.

In case the blowing agent is not stable if stored together with the catalytically active particles, the foam formation system may be provided in a 2-component configuration in which all components are stable and exhibit long shelf life.

It has been found that the foam formation system allows for reducing the water-to-solids ratio in formulations for foamed gypsum products. The following reasons were identified:
▪ The solid particulate composition of the foam formation system, whose function is to catalyze the decomposition of the blowing agent and to stabilize the bubbles, does not add water to the formulation of the water-gypsum-dispersion.
▪ Because of the high efficiency of the partially hydrophobized particles of the foam formation system in stabilizing bubbles, just a small concentration is necessary to generate pores with 0.2 - 1.0 mm median pore size. Thus, the viscosity of the suspension is just slightly increased, requiring no additional water to balance the workability of the water-gypsum-dispersion.
▪ The blowing agents listed as part of the foam formation system feature a high specific gas formation and add just a minimal amount of water to the formulation.

The combination of these effects enables the claimed reduction in the water-to-solids ratio. They are advantageous over the state of the art in manufacturing foamed gypsum products where the pores are generated by mixing an aqueous surfactant foam into a gypsum slurry and where the aqueous foam adds a substantial amount of water to the formulation.

The solid particulate composition is added to the water-gypsum-dispersion in an amount of preferably between 0.1 % by wt. to 6.0 % by wt., preferably between 0.1 % by wt. to 4.5 % by wt., more preferably between 0.1 % by wt. to 3.5 % by wt., and even more preferably between 0.3 % by wt. to 3.5 % by wt., based on the total weight of the water-gypsum-dispersion.

The water that is incorporated in the formulation by adding a blowing agent solution to the water-gypsum-dispersion is preferably between 0.02 % by wt. to 3.00 % by wt., preferably between 0.02 % by wt. to 2.00 % by wt., more preferably between 0.02 % by wt. to 1.50 % by wt., and even more preferably between 0.05 % by wt. to 1.00 % by wt., based on the total weight of the water-gypsum-dispersion.

### Catalytically active particles

The solid particulate composition comprises catalytically active particles (a). The catalytically active particles (a) are selected to react with the chemical blowing agent to form a gas. The catalytically active particles (a) are selected from the group consisting of metal oxides, metal hydroxides, metal carbonates, metal salts, enzymes or a mixture thereof selected from the group consisting of manganese oxides, iron oxides, alkali metal manganates, permanganates, alkali metal halides, enzymes and mixtures thereof.

In one embodiment the catalytically active particles consist of one catalyst. The catalyst is preferably selected from manganese oxide, either synthetically produced MnO2 or naturally occurring mineral MnO2, manganite MnO(OH), potassium manganese (VII) compounds, sodium manganese (VII) compounds, and calcium permanganate.

In a further embodiment the catalytically active particles consist of one catalyst. The catalyst is preferably selected from manganese oxide, either synthetically produced MnO2 or naturally occurring mineral MnO2, potassium iodide, or catalase. In another embodiment the catalytically active particles are a mixture of a first catalyst with a second co-catalyst, wherein the first catalyst is a metal oxide, a metal hydroxide, a metal carbonate, a metal salt, or a mixture thereof selected from the group consisting of manganese oxides and mixtures thereof, and the second co-catalyst is selected from the group consisting of permanganates, alkali metal halides, enzymes and mixtures thereof. The second co-catalyst is present in an amount of 0.5 % by wt. to 80.0 % by wt., preferably in an amount of 2 % by wt. to 75 % by wt., more preferably in an amount of 2 % by wt. to 60 % by wt., based on the total amount of the catalytically active particles; and the first catalyst is different from the second co-catalyst.

If a co-catalyst is used, the second co-catalyst is preferably selected from the group consisting of potassium permanganate, potassium iodide, catalase, more preferably catalase from Micrococcus lysodeikticus, sodium permanganate, ammonium permanganate, calcium permanganate, magnesium permanganate and mixtures thereof, and more preferably the second co-catalyst is potassium permanganate, potassium iodide or catalase.

In a further embodiment, if a second co-catalyst is used, the second co-catalyst is preferably a permanganate selected from the group of potassium permanganate, sodium permanganate, and calcium permanganate.

In one preferred embodiment the foam formation system comprises between 3 to 65 % by wt. of the first catalyst, between 0.2 to 40 % by wt. of the second co-catalyst and between 30 and 95 % by wt. of the blowing agent, wherein the components first catalyst, co-catalyst and blowing agent add up to 100 % by wt.. Preferably, the foam formation system comprises between 5 to 35 % by wt. of the first catalyst, between 4 to 35 % by wt. of the second co-catalyst and between 59 and 90 % by wt. of the blowing agent. Even more preferably, the foam formation system comprises between 6 to 22 % by wt. of the first catalyst, between 4 to 30 % by wt. of the second co-catalyst and between 64 and 90 % by wt. of the blowing agent.

In a further advantageous embodiment, the invention relates to a composition wherein the amount of the catalytically active particles in the water-gypsum-dispersion is in the range of between 0.01 to 2.00 % by wt., preferably 0.01 to 1.00 % by wt., more preferably 0.03 to 0.50 % by wt. in respect to the total weight of the water-gypsum-dispersion.

### Partially hydrophobized foam stabilizing particles

The term "partially hydrophobized" relates to a solid material in particulate form where the particle's surface is modified with amphiphilic molecules. Such modification aims at reducing the hydrophilic properties of the particles in a controlled manner to engineer the wetting properties of the particles such that maximum foam stability is achieved. The partially hydrophobized foam stabilizing particles (b) are referred to as partially hydrophobized particles herein. The partially hydrophobized particles (b) are obtained by modifying the surface of particles (b.1) with amphiphilic molecules (b.2) comprising at least a head group and a tail group. The partially hydrophobized particles (b) are particles (b.1), the surface of which is modified with amphiphilic molecules (b.2) comprising at least a head group and a tail group. The amphiphilic molecules (b.2) adhere to the surface of particles (b.1) resulting in partially hydrophobized particles (b).

The term partially hydrophobized particles denotes particles that form a contact angle of 55 - 85° with the gas to water-gypsum-dispersion interface at the time of foam formation. The contact angle is the angle enclosed by the interface particle to water-gypsum-dispersion and the interface water-gypsum-dispersion to gas with the angle opening in the direction of the water-gypsum-dispersion.

The solid particulate composition also comprises partially hydrophobized particles (b). The particles (b.1) are selected from the group consisting of oxides, hydroxides, carbides, sulfates, nitrides, phosphates, carbonates, silicates, and the surface of the particles (b.1) is modified to obtain the partially hydrophobized particles (b) with amphiphilic molecules (b.2) comprising at least a head group and a tail group.

The nature of the particles (b.1) will depend on the properties of the suspension that is to be foamed and the intended end use of the foam to be formed and particularly includes inorganic materials. Accordingly, the term includes the following exemplary inorganic materials:
- Oxides, including pure and mixed metal oxides, particularly aluminum oxide, silicon dioxide, spinels, cerium-gadoliniumoxide, zirconium oxide, magnesium oxide, tin oxide, titanium oxide and cerium oxide;
- Hydroxides, particularly aluminum hydroxide, calcium hydroxide, magnesium hydroxide, very particularly aluminum hydroxide;
- Carbides, particularly silicon carbide, boron carbide;
- Nitrides, particularly silicon nitride, boron nitride;
- Phosphates, particularly calcium phosphates, such as tricalciumphosphate, hydroxyapatite;
- Carbonates, particularly nickel carbonate, calcium carbonate, such as ground limestone or precipitated calcium carbonate, magnesium carbonate;
- Silicates, particularly silicon dioxide, silica fume, fly ash, quartz, ground glasses, slag, calcium silicates, mullite, cordierite, clay minerals like kaolin or bentonite, zirconium silicate, zeolites, diatomaceous earth, very particularly silica fume, clay minerals, zirconium silicate; specifically clay minerals;
- Sulfates, particularly calcium sulfate.

In a further embodiment, the particles (b.1) include oxides, including pure and mixed metal oxides, selected from the group consisting of aluminum oxides, including Al-Mg spinels, silicon dioxides, zirconium dioxides, and zinc oxides, particularly aluminum oxide, silicon dioxide, and zirconium dioxide.

In a further embodiment, the particles (b.1) are selected from the group of aluminum oxide, silicon dioxide, and calcium carbonate.

According to a preferred aspect, the tail group has a length of less than 18 C-atoms, preferably less than 13 C-atoms, optionally plus an ester linkage. The tail group preferably is a short chain with a length of 4 to 12, preferably 4-9 C-atoms, more preferably 4 to 8 C-atoms, optionally plus an ester linkage.

According to a particularly preferred aspect, the tail group has a length of 4-9 C atoms, optionally plus an ester compound. Such a short-chain tail group reduces the tendency to form bonded pairs of amphiphiles or micelles. Such pairs or micelles do not contribute to the hydrophobization of the particles (b.1) and are therefore undesirable. In the case of molecules with a longer tail group, as is common in surfactants, the formation of micelles in particular would be preferred, and long-chain surfactants therefore have less, too little, or no hydrophobizing effect.

According to a preferred aspect, the tail group is selected from the group consisting of alkyl group, non-aromatic hydrocarbon ring such as alicyclic group, aromatic group. Preferably the tail group is an alkyl group, particularly preferably selected from the group consisting of butyl, pentyl, hexyl, heptyl or octyl, optionally plus an ester compound.

Preferably, the tail group has no branches of more than 3 atoms in length, particularly preferably no branches of more than 1 atom in length, and most preferably no branches at all.

In these considerations, H atoms are not to be taken into account, so that a branching with a CH₃ group, for example, is to be regarded as a branching of 1 atom in length. Overall, the amphiphilic molecule preferably has exactly one hydrocarbon chain, the hydrocarbon chain preferably being unbranched. The amphiphilic molecule may consist of a head group as a hydrophilic end and a hydrocarbon chain as a hydrophobic end, and wherein the hydrophobic end has a molecular mass of less than 300 g/mol.

According to one aspect, the critical micelle concentration of the amphiphilic molecule (b.2) used is therefore typically greater than 10, preferably greater than 100 µmol/l. According to a further aspect, the solubility of the amphiphilic molecules in water is greater than 1 µmol/l.

According to a preferred aspect, the amphiphilic molecule (b.2) has a molecular mass of between 45 g/mol and 285 g/mol. Amphiphilic molecules according to the invention have a molecular mass of less than 300 g/mol, preferably less than 200 g/mol, more preferably less than 160 g/mol or less than 120 g/mol.

According to one aspect, the partially hydrophobized particles are previously hydrophobized particles. This means that the particles (b.1) get partially hydrophobized before they are added to a dispersing medium.

According to a preferred aspect, the concentration of the partially hydrophobized particles in the water-gypsum-dispersion is 0.05 to 10.00 %, preferably 0.1 to 7.0 %, more preferably 0.1 - 4.0 %, and particularly preferably 0.1 - 1.0.%.

According to a preferred aspect, the median diameter of the partially hydrophobized particles is 0.02 - 20 µm, preferably 0.03 - 10 µm, particularly preferably 0.05 - 5 µm or even 0.1 - 5 µm. Preferably, the partially hydrophobized particles have an average aspect ratio (ratio of longest to shortest diameter) of less than 5, preferably less than 3, particularly preferably less than 2.

In one embodiment the tail group of the amphiphilic molecules (b.2) is selected from an aliphatic group or an aromatic group or a cyclic group having 2 to 18 carbon atoms, preferably 2 to 12 carbon atoms, particularly preferably 2 to 8 carbon atoms, and optionally one or more substituents and the head group of the amphiphilic molecules is selected from phosphates, phosphonates, sulphates, sulphonates, alcohols, amines, amides, pyrrolidines, gallates, carboxylic acids and the amount of amphiphilic molecules (b.2) on the particles (b.1) is in the range of 0.5 - 160.0 µmol (b.2) / m² particle (b.1), preferably 1 - 56 µmol (b.2) / m² particle (b.1) more preferably 1 - 28 µmol (b.2) / m² particle (b.1) and even more preferably 3.5 - 28.0 µmol (b.2) / m² particle (b.1).

In a particular embodiment, the head group of the amphiphilic molecules is selected from amines, gallates, and carboxylic acids.

The amphiphilic molecules comprise a hydrophilic head group, which is polar, and a hydrophobic tail group, which is mainly non-polar, or consists of these.

The hydrophilic head group may have a positive or negative charge (where charge also includes a partial charge, such as a certain electronegativity of the head group). Preferably, the head group is ionized.

Preferably, the charge of the head group is chosen contrary to the charge on the particle surface and as a function of the pH value of the dispersion. A sufficiently strong charge of the head group is required so that the head group can successfully displace the water from the surface of the particles (b.1) dispersed in the water and have a hydrophobizing effect on the particles (b.1). Only then does the hydrophobizing additive attach to the particles (b.1) with the head group and can partially hydrophobize them by means of the tail group.

The following considerations ensure that the charge of the head group is sufficiently strong to fulfill this condition.

According to a preferred aspect, for electrostatically adsorbing amphiphiles, at least half of the head groups are charged at the processing pH of the dispersion. This ensures effective hydrophobization. At the processing pH of gypsum slurries of 6 - 8, the hydrophobization of particles (b.1) is particularly effective if the head group of the amphiphiles (b.2) and the surface of the particles (b.1) are oppositely charged.

In the case of negatively charged particles (b.1), the negative logarithm of the acid constant, pKs, of the hydrophobizing additive (b.2) in protonated form is preferably greater than 10. In case of positively charged particles (b.1), the negative logarithm of the acid constant, pKs, of the hydrophobizing additive (b.2) is preferably lower than 5.

This ensures that more than half of the head groups of the amphiphilic molecules (b.2) are protonated (bases) or deprotonated (acids) at the processing pH (6 - 8).

According to a preferred aspect, the head group of the amphiphilic molecule (b.2) comprises at least one element selected from the group consisting of carboxy group, gallate group, amine group, sulfate group, phosphate group, alcohol group, and pyrrole group.

The tail group is hydrophobic. Preferably, the tail group comprises a chain of C-atoms, in particular the tail group can be a hydrocarbon chain. In addition, the tail group may optionally have an ester compound via which it is coupled to the head group.

### Blowing agent

The foam formation system further comprises a chemical blowing agent. The blowing agent is a substance that can be decomposed to release a gas, creating bubbles within a liquid.

The blowing agent is a chemical blowing agent preferably selected from hydrogen peroxide (H₂O₂), peroxo compounds which release oxygen in the presence of a catalyst, alkali metal peroxides, alkaline earth metal peroxides, carbonates and hydrogen carbonates, preferably selected from hydrogen peroxide, sodium carbonate and sodium hydrogen carbonate.

If the blowing agent is hydrogen peroxide all amounts given herein refer to an aqueous peroxide solution containing 50 % by wt. of hydrogen peroxide.

The blowing agent is preferably added to the water-gypsum-dispersion in an amount between 0.01 % wt. and 5.00 % wt., preferably 0.01 % wt. and 3.00 % wt., more preferably between 0.05 % wt. and 3.00 % wt..

The blowing agent reacts with the catalytically active particles (a) to release a gas and, in the presence of partially hydrophobized foam stabilizing particles (b), form a foam. This means that macropores in the gypsum body are formed by a foaming process. The catalyst is added to the foam formation system to decompose the peroxide or other chemical blowing agents.

### Preparation of the solid particulate composition of the foam formation system

The solid particulate composition can be prepared by different methods.

In one embodiment, the solid particulate composition is prepared by blending particles (b.1), amphiphilic molecules (b.2) and catalytically active particles (a) plus optionally additional additives in a suitable apparatus until a homogeneous mix is achieved. Accordingly, the method comprises the step of combining the raw materials in the appropriate amounts to obtain the solid particulate composition as described herein. The combination of the raw materials may be accomplished by known methods. A suitable method includes supplying the raw materials to a ball mill and blending the materials for a prolonged period of time. A suitable mixing time is from 1 - 100 hrs, preferably 12 - 24 hrs or 2 - 16 hrs. In an advantageous embodiment, the method is performed dry, i.e. without adding solvents to the reaction system.

In another embodiment, the solid particulate composition is prepared in-situ during the production of the water-gypsum-dispersion. The particles (b.1) and the amphiphilic molecules (b.2) are blended to prepare partially hydrophobized particles (b). The partially hydrophobized particles (b) and the catalytically active particles (a) are added to the gypsum powder and/or the water without premixing them. Thus, the solid particulate composition is formed during mixing with the gypsum powder and/or the water.

### Additives

The gypsum slurry may comprise one or more additives. The additives are preferably selected from the group consisting of pH adjusting agents, additives for mechanical reinforcement, fire retardants, dispersing agents, additives against positive or negative thermal expansion, additives to delay or accelerate the setting reaction and/or additives to reduce the setting expansion.

Additives include accelerators and retarders to setting reactions of hydratable materials. Examples for accelerators of the hydration reaction include calcium sulfate dihydrate, calcium salts, such as calcium chloride and calcium nitride, lithium salts, lithium hydroxide and triethanolamine. Examples of retarders of the hydration reaction include citric acid, cellulose, Retardan^{®} by Sika, sugars, tartaric acid and its salts.

Additives further include dispersing aids, for example polycarboxylic ethers, melamine sulfonate, naphthalene sulfonate and lignin sulfonates.

Additives further include rheology modifiers, for example cellulose and cellulose derivatives, polyvinyl alcohol, polyethylene imine, polyethylene oxide, polyethylene glycol, xanthan gum, bentonite, microsilica and fine calcium carbonates.

The gypsum slurry may also contain one or more binders as additives. The binder may be used for the production of gypsum plasterboards to bond the gypsum particles to the paper in such a way that the gypsum coating does not peel off, even under typical stress, both during manufacture and when the paper is applied to a gypsum core. Binders can be organic binders or inorganic binders e.g. latex particles, starch, carboxymethyl cellulose or polyvinyl alcohol.

The amount of the one or more additives in the gypsum slurry may be in the range of 0 - 8 %, preferably 0 - 4 %, more preferably 0 - 2 %, even more preferably 0 - 1% in respect to the water-gypsum-dispersion.

### Preparation of a foamed gypsum body

According to a first embodiment, the water-gypsum-dispersion is produced by first preparing the solid particulate composition. Particles (b.1) are placed in a mixing vessel. Catalytically active particles (a) and the amphiphilic molecules (b.2) are added, as well as optionally a second co-catalyst and optionally one or more additives. The components are mixed until homogeneous. The mixing vessel is, for example, a ball mixer with ceramic balls or a plowshare mixer. The result is a dry mixture; although the amphiphilic molecules are liquid, the quantity added is too small to produce a paste or similar. The product is then removed from the mixing vessel and processed further. It can either be premixed with the gypsum powder in a dry mixer or added directly to the mixing water during suspension production, either before, during, or after addition of the gypsum powder.

This is followed by suspension production and foam production. For this purpose, mixing water is placed in a container. Gypsum and the solid particulate composition are added and stirred with a suitable stirring device until a homogeneous suspension is produced. The stirring time depends on the efficiency of the stirring tools, typical mixing times are e.g. 1 to 2 minutes. The blowing agent is added to the homogeneous suspension and the suspension is further homogenized; only short homogenization times of e.g. a few seconds are necessary. Once the blowing agent is sufficiently well homogenized into the water-gypsum-dispersion, the gypsum slurry is poured into a mold or onto a conveyor belt.

According to a further embodiment for producing the water-gypsum-dispersion, the solid particulate composition is produced in-situ. In a first step, particles (b.1) are placed in a mixing vessel. The amphiphilic molecules (b.2) are added. The components are mixed until a homogeneous mixture is achieved. The result is a dry mixture; although the amphiphilic molecules are liquid, the quantity added is too small to produce a paste or similar. The partially hydrophobized particles (b) are then removed from the mixing vessel and processed further. The particles (b) can either be premixed with the gypsum powder in a dry mixer or added directly to the mixing water during suspension production.

In a next step, gypsum powder, the partially hydrophobized particles (b) from the first step and catalytically active particles (a), and optionally one or more additives, are added to a mixing vessel. The components are dry-mixed until they are homogeneous, resulting in a dry pre-mixture. Mixing takes place in a suitable mechanical mixer such as, for example, a mortar mixer or plowshare mixer.

This is followed by suspension and foam production. For this purpose, mixing water is placed in a container. If a co-catalyst is used, this can be added to the mixing water together with any other additives such as retarders or liquefiers; the mixture is homogenized until the added substances are dissolved. The dry pre-mixture is added to the mixing water or the water mixture and stirred with a suitable stirring device until a homogeneous suspension is formed. The blowing agent is added to the homogeneous suspension and homogenized further; only short homogenization times of e.g. a few seconds are necessary. Once the blowing agent is sufficiently well homogenized into the water-gypsum-dispersion, the gypsum slurry (expanding suspension) is poured into a mold or onto a conveyor belt.

### Foamed gypsum body

In another aspect, the invention relates to a foamed gypsum body produced by the method according to the invention.

The foamed gypsum body has a density of 80 to 900 kg/m³, preferably 300 to 800 kg/m³, more preferably 500 to 800 kg/m³.

The three point bending strength of the foamed gypsum body is 0.5 - 15.0 MPa, preferably 0.5 - 10.0 MPa, more preferably 0.5 - 7.0 MPa, particularly preferably 1 - 5 MPa, and alternatively 0.5 - 3.0 MPa.

The compressive strength of the foamed gypsum body is 1 - 20 MPa, preferably 1 - 15 MPa, more preferably 1 - 10 MPa, particularly preferably 1 - 7 MPa, and alternatively 1 - 4 MPa.

The foamed gypsum body has a median pore size of 0.1 to 2.0 mm, preferably 0.1 - 1.0 mm, more preferably 0.15 - 0.80 mm, and even more preferably 0.18 - 0.60 mm.

The foamed gypsum body has good mechanical properties and an even pore size distribution. Due to the use of the foam formation system the foamed gypsum body exhibits the desired target porosity despite the high amount of solids in the gypsum slurry, which usually negatively affects foam incorporation and therefore achieving the desirable porosity.

The properties of the pores can be changed in a precise and controlled manner by varying the components of the foam formation system. Only a few specific tests are required to adjust the desired properties in a controlled and reproducible manner. This is due to the high stability of the foam prepared according to the invention, which leads to homogeneous properties of the foamed gypsum body.

Various possible properties are described below, which can be used to characterize the foamed gypsum body according to the invention.

### Density

According to one aspect, a foamed gypsum body is provided which has a density after drying of 80 to 900 kg/m³, preferably 300 to 800 kg/m³, more preferably 500 to 800 kg/m³.

The apparent density of a foamed gypsum body, "d", is given in kg/m³. The apparent density refers to the ratio of the weight of a foam body divided by the volume of the total foam body including the pore volume. The "total porosity" of a foam, "p", is given in vol%. This term is defined according to the equation: p = (1 - d/dm) * 100 vol% where "dm" is the density of the material of the foam excluding the pore volume. A dm = 2320 kg/m³ is assumed for the total porosity determinations noted in this document. The density can be defined in terms of DIN 4226-2: 1983-04. The density is determined by the fraction of macropores and micropores per unit volume of foamed gypsum body.

"Macropores", as this term is used herein, are the pores in the foam that originate from the action of a blowing agent or from generating air or gas bubbles by injecting a gas or frothing a foamable suspension. The macropores exhibit median pore sizes > 0.030 mm and can typically be characterized by light microscopic image analysis.

"Micropores", as this term is used throughout the present specification, refers to fine pores between the aggregates forming the solid phase of an inorganic foam. This solid phase consists of matter that is usually not 100 percent impervious but contains a certain volume fraction of micropores. The size and shape of micropores depend largely on the chemical and mineral composition of the solid phase, additives, and on material processing. The dimensions of the micropores are < 0.030 mm and can therefore typically not be characterized by light microscopic image analysis.

### Homogeneity

The density of the gypsum body preferably has a distribution width within the gypsum body of less than 5%, preferably less than 3%, more preferably less than 2% or even less than 1%, wherein the density is defined as an average density in regular volumes of 50 ml.

The microstructure is essentially homogeneous if a test specimen (such as a cylinder with a depth of 2 cm and a diameter of 2 cm or a body with a volume of at least 50 cm³ and with minimal dimensions of ten times the median value of the pore size) is taken from any two points of the material and one property of these test specimens obtained matches each other within a predetermined tolerance range. The property may be one or more elements selected from the group consisting of the following: Density, porosity, mean pore size of macropores, or a combination thereof. The predetermined tolerance may be 10%, preferably 5%, more preferably 3%, more preferably 2%.

### Microstructure

The foam production method according to the invention leads to a desirable microstructure of the foamed gypsum body. The microstructure is characterized in particular by macropores and micropores and their properties, such as pore size and pore size distribution as well as homogeneity of the microstructure and these properties are discussed in the following.

The term "median pore size d50" (of the macropores as defined herein) is given in millimeter. The median pore size value of a foam is determined by optical image analysis. Cross-sectional images of foam bodies are analyzed applying the linear intercept method using the software "Lince", Linear Intercept (TU, Darmstadt, Germany). A given d50 value means that 50% of the pores are smaller than or equal to that value. A "d10"-value means that 10% of the pores are smaller than or equal to that value and a "d90"-value means that 90% of the pores are smaller than or equal to that value. The span of the (macro)pore size distribution, "Sp" is defined by the following equation: Sp = (d90 - d10)/d50.

According to one aspect, there is provided a foamed gypsum body comprising a porous gypsum-based material comprising macropores, the median size of the macropores d50 of the gypsum body is 0.10 - 2.00 mm, preferably 0.10 - 1.00 mm, more preferably 0.15 - 0.80 mm, and particularly preferably 0.18 - 0.60 mm. According to one aspect, the size of the macropores is influenced by the choice of the mixing ratio of the components mentioned herein, for example of the components of the foam formation system, optionally further additives, as well as the conditions during the formation of the wet foam.

According to one aspect, there is provided a foamed gypsum body comprising a porous gypsum-based material comprising macropores, the span of the macropore size distribution Sp is 0.5 - 2.5, preferably 0.5 - 2.0, more preferably 0.8 - 2.0 and particularly preferably 0.8 - 1.6.

Closed porosity or the proportion of closed macropores is determined by randomly drawing lines on a representative optical microstructure image. The macropores over which the line runs are counted if they are not located in an edge area and if the entire inner wall of the pore is visible. When counting the pores, it is also noted how many pores have walls that are penetrated by one or more pore openings. The closed porosity can be defined as the percentage of closed pores in relation to the total number of pores counted. At least 100 pores need to be evaluated.

The macropores are defined as pores with a median diameter of more than 30 µm. The macropores can therefore be clearly distinguished from the micropores.

According to one aspect, there is provided a foamed gypsum body comprising a porous gypsum-based material comprising macropores having a median pore diameter of between 0.1 mm and 5 mm. According to a preferred aspect, the median pore diameter is at least 0.25 mm, particularly preferably at least 0.5 mm. According to a further preferred aspect, the median diameter is up to 5 mm, particularly preferably up to 3 mm, and most preferably up to 2 mm or even only up to 1 mm.

According to a preferred aspect, the macropores have a volume proportion of 10 - 95 % in relation to the total volume of the foamed gypsum body, more preferably they have a volume fraction of 10 - 80%, and particularly preferably 25 - 70%.

According to a preferred aspect, the volume enclosed by the macropores is greater than the volume of the continuous phase meaning the material surrounding the macropores (whereby the interior of micropores in the continuous phase is counted as part of the continuous phase, the material surrounding the macropores). Depending on the porosity of the micropores, this applies up to a density of approx. 510 kg/m³. Alternatively, if the density is higher, the volume of the continuous phase can be larger than the volume of the macropores.

According to a preferred aspect, the ratio of the density (kg/m³) of the foamed gypsum body to the median diameter (mm) of the macropores is between 20:1 and 6000:1. Preferably, the ratio of density to diameter is between 20:1 and 4500:1, more preferably, the ratio of density to diameter is between 450:1 and 4500: 1.

According to one aspect, there is provided a foamed gypsum body comprising a porous gypsum-based material, wherein the foamed gypsum body comprises macropores having a median pore diameter of between 0.1 mm and 10 mm and further comprises micropores having a typical dimension defined in any cross-sectional plane of 0.02-20 µm, preferably 0.02-10 µm, more preferably 0.02-5 µm.

The foamed gypsum body is homogeneous in density, total porosity, and median pore size of the macropores. A foamed gypsum body is regarded as homogeneous if the percent standard deviation for one property chosen from the list of density, total porosity, or median pore size and measured for a series of four samples of at least 50 mL volume is smaller than 5%, preferably smaller than 3%, more preferably smaller than 2% and most preferably smaller than 1%.

Due to the even distribution of the pores and the high porosity the foamed gypsum body can be used for a variety of applications.

### Use

In another aspect, the invention relates to a use of a foamed gypsum body according to the invention for the production of gypsum cores and plaster boards and wall elements.

### Examples

### Preparation of the partially hydrophobized particles

A 1000 mL LD-PE bottle was provided, filled up to 30% of its volume with 15 mm diameter alumina spheres for supporting the blending process. The particles (b.1) were filled in the bottle, the amphiphilic molecules (b.2) were pipetted on top of the powder. The bottle was then rolled for 18 h to obtain a homogeneous blend. The partially hydrophobized particles were separated from the balls using a polymer sieve.

### Providing the foam formation system

The partially hydrophobized particles (b) were filled into a container, the catalytically active particles (a), the 1^{st} catalyst and 2^{nd} co-catalyst, were added. The blowing agent was weighed into a separate container. The foam formation system of these examples was provided as a 2-component system.

### Preparation of the water-gypsum-dispersion and the porous gypsum body

The gypsum raw material was compounded with the first component of the foam formation system, the solid particulate composition, namely the partially hydrophobized particles (b) and the catalytically active particles (a), and, if any was foreseen, with the calcium sulfate dihydrate powder (Casea GmbH, Germany) as accelerating additive. Water was given to a mixing vessel, and, if any were foreseen, the liquefying additive Melflux PCE 541 L/44 F.F. (BASF SE, Germany) and/or the retarding additive citric acid monohydrate were admixed, followed by the gypsum compound. Under thorough mixing, a homogeneous dispersion was obtained. Thereafter, the second component of the foam formation system, the blowing agent, was added and homogenized for 6 seconds. Immediately after homogenization, the dispersion was poured into a mold where the foam expansion evolved until the blowing agent was entirely decomposed. Typically, in such lab scale batch experiments, the setting reaction started 4 - 8 min and ended 20 to 60 min after addition of the blowing agent. After setting, the foam was demolded and dried to constant weight at 40°C to obtain the foamed gypsum body.

**Table 1 Composition of water-gypsum-dispersions according to examples 1 to 5.**

| | **Comp-Ex1** | **Ex2** | **Ex3** | **Ex4** | **Ex5** |
|---|---|---|---|---|---|
| **Partially hydrophobized particles** | (%) | (%) | (%) | (%) | (%) |
| Particles (b.1), Precarb 100 (Schaefer Kalk) | 99.50 | 99.50 | 99.50 | 99.50 | 99.50 |
| Amphiphilic molecule (b.2), nonanoic acid | 0.50 | 0.50 | 0.50 | 0.50 | 0.50 |
| Total | 100.00 | 100.00 | 100.00 | 100.00 | 100.00 |
| | | | | | |
| | | | | | |

| **Foam formation system** | (%) | (%) | (%) | (%) | (%) |
|---|---|---|---|---|---|
| 1st catalyst, MnO₂ | 5.77 | 42.54 | 39.43 | 17.76 | 17.06 |
| 2nd co-catalyst, KMnO₄ | 1.70 | 0.95 | 0.25 | 0.34 | 0.33 |
| Partially hydrophobized particles (b) | 59.40 | 33.30 | 30.86 | 42.40 | 40.74 |
| Blowing agent, H₂O₂, 50% solution | 33.13 | 23.21 | 29.46 | 39.50 | 41.87 |
| Total | 100.00 | 100.00 | 100.00 | 100.00 | 100.00 |
| | | | | | |
| | | | | | |

| **Water-gypsum-dispersion** | (%) | (%) | (%) | (%) | (%) |
|---|---|---|---|---|---|
| Gypsum, α-hemihydrate | | | | 70.73 | 73.37 |
| Gypsum, β-hemihydrate | 60.04 | 65.59 | 72.58 | | |
| Foam formation System | 0.74 | 1.23 | 1.22 | 0.95 | 0.96 |
| Liquefier | | | 0.16 | | |
| Accelerator | | | 0.29 | | |
| Retarder | | 0.03 | | | |
| Water | 39.22 | 33.14 | 25.75 | 28.32 | 25.67 |
| Total | 100.00 | 100.00 | 100.00 | 100.00 | 100.00 |

**Table 2 Ratios of catalyst, co-catalyst and blowing agent in the water-gypsum-dispersion and the water-to-solids ratio of the dispersion of Table 1 after foaming and before setting.**

| | **Ex1** | **Ex2** | **Ex3** | **Ex4** | **Ex5** |
|---|---|---|---|---|---|
| Foam formation system/water-gypsum-dispersion (%) | 0.74 | 1.23 | 1.22 | 0.95 | 0.96 |
| Partially hydrophobized particles (b)/water-gypsum-dispersion (%) | 0.44 | 0.41 | 0.38 | 0.40 | 0.39 |
| Ratio catalyst/(a) (%) | 77.25 | 97.82 | 99.36 | 98.10 | 98.09 |
| Ratio co-catalyst/(a) (%) | 22.75 | 2.18 | 0.64 | 1.90 | 1.91 |
| Ratio (a)/blowing agent (-) | 0.23 | 1.87 | 1.35 | 0.46 | 0.42 |
| catalyst/co-catalyst (-) | 3.39 | 44.78 | 154.96 | 51.56 | 51.49 |
| w/s (-) | 0.65 | 0.50 | 0.35 | 0.40 | 0.35 |

**Table 3 Material properties of porous gypsum bodies prepared using the water-gypsum-dispersions of Table 1**

| | Ex1 | Ex2 | Ex3 | Ex4 | Ex5 |
|---|---|---|---|---|---|
| Dry total porosity (vol%) | 70.5 | 71.2 | 70.4 | 71.6 | 70.4 |
| Dry density (kg/m3) | 685 | 668 | 687 | 658 | 687 |
| Pore size d10 (mm) | 0.185 | 0.286 | 0.317 | 0.344 | 0.341 |
| Pore size d50 (mm) | 0.623 | 0.654 | 0.621 | 1.014 | 0.992 |
| Pore size d90 (mm) | 1.002 | 1.243 | 1.263 | 2.024 | 1.793 |
| Span pore size Distribution (-) | 1.31 | 1.46 | 1.52 | 1.66 | 1.46 |
| Bending strength (MPa) | 2.2 | 1.7 | 2.6 | 2.3 | 2.5 |
| Compressive strength (MPa) | 3.2 | 2.2 | 4.1 | 3.4 | 3.8 |

The water-gypsum-dispersion of Examples 1 - 3 (Ex1 -Ex3) was prepared from β-hemihydrate (see Table 1). As is shown in Table 2, Examples 1, 2 and 3 were formulated with a water-to-solids ratio of 0.65, 0.50, and 0.35, respectively. To achieve the w/s of 0.35 in Example 3, the addition of a liquefier was required. In all 3 cases, foamed gypsum bodies with densities below 690 kg/m³ were obtained. Examples 4 and 5 (Ex4, Ex5) were made using α-hemihydrate gypsum at a w/s ratio of 0.40 and 0.35. Because the water demand for processing of α-hemihydrate is lower compared to β-hemihydrate, a w/s of 0.35 can be achieved without using liquefiers. For both gypsum types, the highest bending and compressive strength values were achieved with the lowest w/s ratio.

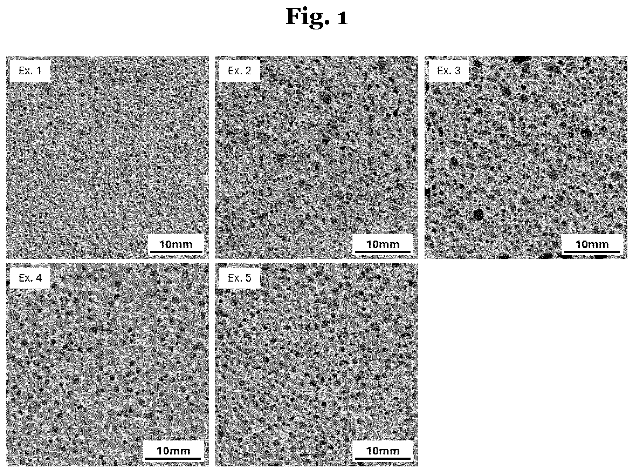

Figure 1 shows photographs of the pore structure of the gypsum bodies prepared according to examples 1 to 5.

The results show that the inventive method allows for the preparation of porous gypsum bodies with low densities at low to very low water-to-solids ratios. This is possible because the foam formation system adds just a minimal amount of water to the formulation, as is explained in the section "Foam Formation System". In addition, it is demonstrated that the inventive method results in foamed gypsum bodies independent of the presence of a standard liquefier. There seems to be no or just a weak interaction between the liquefier and the foam formation system, the latter being responsible for the generation and stabilization of bubbles.

## Claims

1. Water-gypsum-dispersion comprising
- 50 - 77 % by wt. gypsum,
- a foam formation system comprising a solid particulate composition and at least one chemical blowing agent,
- water,
- optionally one or more additives,
wherein the gypsum particles and the solid particulate composition are dispersed in the water,
wherein the solid particulate composition comprises
(a) catalytically active particles and
(b) partially hydrophobized particles,
wherein the amount of (b) in the solid particulate composition is in the range of 20.0-99.8% and/or the amount of (a) is in the range of 0.2-80.0%, and
∘ wherein the catalytically active particles (a) are selected to react with the chemical blowing agent to form a gas, and the catalytically active particles (a) are selected from the group consisting of metal oxides, metal hydroxides, metal carbonates, metal salts, enzymes or a mixture thereof selected from the group consisting of manganese oxides, iron oxides, alkali metal manganates, permanganates, alkali metal halides, enzymes and mixtures thereof, and
∘ wherein the partially hydrophobized particles (b) are selected from the group consisting of oxides, hydroxides, carbides, sulfates, nitrides, phosphates, carbonates, silicates (b.1), and
∘ wherein the partially hydrophobized particles (b) are obtained by modifying the surface of particles (b.1) with amphiphilic molecules (b.2) comprising at least a head group and a tail group,
**characterized in that**
the water-gypsum-dispersion has a low water-to-solids ratio between 0.30 and 0.65, and the water-to-solids (w/s) ratio refers to the slurry after complete expansion of a water-gypsum-dispersion to foam and before hardening of the gypsum.

2. Water-gypsum-dispersion according to claim 1, **characterized in that** the gypsum is anhydrous gypsum, a gypsum hemihydrate, a gypsum hydrate or a mixture thereof, preferably the gypsum is alpha calcium sulfate hemihydrate, beta calcium sulfate hemihydrate, water-soluble calcium sulfate anhydrite, or a mixture thereof.

3. Water-gypsum-dispersion according to claim 1 or 2, **characterized in that** the catalytically active particles are selected from manganese oxide, either synthetically produced MnO₂ or naturally occurring mineral MnO₂, manganite MnO(OH), potassium manganese (VII) compounds, sodium manganese (VII) compounds, calcium permanganate, and mixtures thereof.

4. Water-gypsum-dispersion according to any one of the claims 1 or 2, **characterized in that** the catalytically active particles are a mixture of a first catalyst with a second co-catalyst, wherein the first catalyst is a metal oxide, a metal hydroxide, a metal carbonate, a metal salt, an enzyme or a mixture thereof selected from the group consisting of manganese oxides, enzymes and mixtures thereof, and the second co-catalyst is selected from the group consisting of permanganates, alkali metal halides, enzymes and mixtures thereof and the co-catalyst is present in an amount of 0.5 % by wt. to 80.0 % by wt. based on the total amount of the catalytically active particles; and the first catalyst is different from the second co-catalyst.

5. Water-gypsum-dispersion according to claim 4, **characterized in that** the second co-catalyst is selected from the group consisting of potassium permanganate, potassium iodide, catalase, preferably catalase from Micrococcus lysodeikticus, sodium permanganate, ammonium permanganate, calcium permanganate, magnesium permanganate and mixtures thereof, preferably the second co-catalyst is potassium permanganate, potassium iodide or catalase.

6. Water-gypsum-dispersion according to any one of the preceding claims, **characterized in that** the tail group of the amphiphilic molecules is selected from an aliphatic group or an aromatic group or a cyclic group having 2 to 18 carbon atoms, preferably 2 to 10 carbon atoms, particularly preferably 2 to 8 carbon atoms, and optionally one or more substituents and that the head group of the amphiphilic molecules is selected from phosphates, phosphonates, sulphates, sulphonates, alcohols, amines, amides, pyrrolidines, gallates, carboxylic acids and the amount of amphiphilic molecules (b.2) on the particles (b.1) is in the range of 0.5 - 160 µmol (b.2) / m² particle (b.1).

7. Water-gypsum-dispersion according to any one of the preceding claims, **characterized in that** the blowing agent is selected from hydrogen peroxide, peroxo compounds which release oxygen in the presence of a catalyst, alkali metal peroxides, alkaline earth metal peroxides, carbonates and hydrogen carbonates, preferably selected from hydrogen peroxide, sodium carbonate and sodium hydrogen carbonate.

8. Water-gypsum-dispersion according to any one of the preceding claims, **characterized in that** the water-gypsum-dispersion is prepared by mixing
50 to 77 % by wt. gypsum, preferably calcined gypsum,
22.9 to 49.9 % by wt. water,
0.1 to 20.0 % by wt. foam formation system,
optionally one or more additives,
optionally one or more fillers, and
optionally one or more binders,
wherein the components add up to 100 % by wt..

9. Method for producing a foamed gypsum body comprising the steps of
a) preparing a water-gypsum-dispersion according to anyone of the preceding claims by
a1) mixing
∘ water or an aqueous solution,
∘ in arbitrary order
▪ gypsum, preferably calcined gypsum,
▪ a foam formation system comprising a solid particulate composition and at least one chemical blowing agent and
▪ optionally one or more additives,
until at least the gypsum and the solid particulate composition are suspended in the water or
a2) mixing
∘ water or an aqueous solution,
∘ in arbitrary order
▪ gypsum, preferably calcined gypsum,
▪ as the first component of the foam formation system a solid particulate composition and
▪ optionally one or more additives
until the gypsum and the solid particulate composition are suspended in the water and
adding the second component of the foam formation system, the blowing agent, to the water-gypsum-mixture,
b) mixing the water-gypsum-dispersion of step a1) or step a2) until the gypsum slurry is homogenous, and
c) transferring the foamed gypsum slurry to a mold or a production line,
d) allowing the foamed gypsum slurry to harden and drying it,
- wherein the solid particulate composition comprises
(a) catalytically active particles and
(b) partially hydrophobized particles,
wherein the amount of (b) in the solid particulate composition is in the range of 20.0-99.8% and/or the amount of (a) is in the range of 0.2-80.0%, and
∘ wherein the catalytically active particles (a) are selected to react with the chemical blowing agent to form a gas, and the catalytically active particles (a) are selected from the group consisting of metal oxides, metal hydroxides, metal carbonates, metal salts, enzymes or a mixture thereof selected from the group consisting of manganese oxides, iron oxides, alkali metal manganates, permanganates, alkali metal halides, enzymes and mixtures thereof, and
∘ wherein the partially hydrophobized particles (b) are selected from the group consisting of oxides, hydroxides, carbides, sulfates, nitrides, phosphates, carbonates, silicates (b.1), and
∘ wherein the partially hydrophobized particles (b) are obtained by modifying the surface of particles (b.1) with amphiphilic molecules (b.2) comprising at least a head group and a tail group, and
**characterized in that**
the gypsum slurry has a low water-to-solids ratio between 0.30 and 0.65, and the water-to-solids (w/s) ratio refers to the slurry after complete expansion of a water-gypsum-dispersion to foam and before hardening of the gypsum.

10. Method according to claim 9, **characterized in that** the method comprises the steps of
- casting the gypsum slurry on a conveyor-belt or casting the gypsum slurry in a hollow mold,
- hardening the gypsum slurry to a gypsum body on the conveyor belt or in the hollow mold and
- drying the gypsum body.

11. Method according to any one of the claims 9 or 10, **characterized in that** the gypsum slurry comprises one or more additives, and the additives are selected from the group consisting of pH adjusting agents, additives for mechanical reinforcement, fire retardants, dispersing agents, additives against positive or negative thermal expansion, additives to delay or accelerate the setting reaction and/or additives to reduce the setting expansion.

12. Foamed gypsum body produced by the method according to any one of the claims 9 to 11.

13. Foamed gypsum body according to claim 12, **characterized in that** the foamed gypsum body has a density of 80 to 900 kg/m³.

14. Foamed gypsum body according to claim 12 or 13, **characterized in that** the foamed gypsum body has a median pore size of 0.1 to 2.0 mm.

15. Use of a foamed gypsum body according to any of the claims 12 to 14 for the production of gypsum cores, plaster boards or wall elements.
